(19) Europäisches Patentamt
European Patent Office
Office européen des brevets

(11) **EP 1 898 331 B1**

(12) **EUROPÄISCHE PATENTSCHRIFT**

(45) Veröffentlichungstag und Bekanntmachung des Hinweises auf die Patenterteilung:
**11.11.2015 Patentblatt 2015/46**

(21) Anmeldenummer: **07014334.2**

(22) Anmeldetag: **20.07.2007**

(51) Int Cl.:
**G06F 9/48** (2006.01) **G06F 21/55** (2013.01)
**G06F 21/71** (2013.01)

(54) **Verfahren und Vorrichtung zur nebenläufigen Ausführung von Prozessen**

Method and device for concurrent performance of processes

Procédé et dispositif destinés à l'exécution secondaire de processus

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.08.2006 DE 102006038879**

(43) Veröffentlichungstag der Anmeldung:
**12.03.2008 Patentblatt 2008/11**

(73) Patentinhaber: **Giesecke & Devrient GmbH**
**81677 München (DE)**

(72) Erfinder: **Spitz, Stephan, Dr.**
**81247 München (DE)**

(56) Entgegenhaltungen:
WO-A-2004/081971 GB-A- 2 248 125
US-A1- 2003 115 478

**Beschreibung**

Das Gebiet der Erfindung sind Verfahren zur nebenläufigen Ausführung von Prozessen in tragbaren Datenträgern, wie beispielsweise Chipkarten, oder in fest in ein Endgerät eingebaute Sicherheitsmodule sowie entsprechende manipulationsgesicherte Einheiten.

Um zu vermeiden, dass durch Messung des Stromverbrauchs einer Chipkarte auf den gerade abgearbeiteten Befehl oder die zugehörigen möglicherweise geheimen Daten geschlossen werden kann, sind verschiedene Abwehrmaßnahmen bekannt.

So kann beispielsweise über einen Shunt-Widerstand ein zeitunabhängiger Stromverbrauch sichergestellt werden. Alternativ können gerade nicht benötigte Komponenten wie ein CRC-Prüfsummengenerator oder der Coprozessor mit Zufallsdaten als Eingangswerte aktiviert werden, um den Stromverbrauch zu verschleiern. Man kann unter anderem zufallsgesteuerte Wartezeiten (Random Delays) einführen oder in gleiche Berechnungen in Kryptoalgorithmen verschiedene Abläufe einführen, welche jeweils zufällig ausgewählt werden.

Bei einem PIN-Vergleich könnte der Antwortzeitpunkt der Chipkarte oder ein Zugriff auf dessen nicht-flüchtigen Speicher Rückschlüsse auf ein Teilergebnis des Vergleichs zulassen (Timing-Angriff). Daher fügt man in die für den Vergleich auszuführende Befehlsfolge in entsprechender Form NOP-Anweisungen ein, so dass die tatsächliche Verarbeitungszeit der auszuführenden Befehlsfolge unabhängig von den Eingangsdaten des Vergleichs ist.

Auch in den an sich bekannten multitasking- oder multithreadingfähigen Chipkarten, in denen mehrere Prozesse (Tasks und/ oder Threads) nebenläufig, also quasi gleichzeitig, ausgeführt werden, sollten entsprechende Abwehrmaßnahmen angewandt werden.

Die WO 2004/010300 A2 offenbart ein Verfahren um die Ausführung eines Programms gegen Angriffe durch Strahlung, insbesondere Lichtblitze zu sichern. Es wird die Verarbeitungszeit einer Folge von Befehlen in einer monolithischen integrierten elektronischen Schaltung, insbesondere einer Chipkarte überwacht. In einem CISC (Complex Instruction Set Computer) variiert die Verarbeitungszeit einer Anweisung zwischen 2 und 11 Taktzyklen. Wenn eine kritische Folge von Befehlen beginnt, wird ein Zähler gestartet, der nach der planmäßigen Abarbeitung der Folge von Befehlen einen Interrupt auslöst. Außerdem wird beim Beginn der Folge von Befehlen der erwartete Wert des Programmzählers in einer Variablen gespeichert. Nach der Abarbeitung der Folge von Befehlen wird beim Auslösen des Interrupts der tatsächliche Wert des Programmzählers mit dem gespeicherten Wert verglichen. Bei einer Abweichung zwischen beiden Werten wird auf einen Angriff geschlossen. Damit auch in verzweigten Folgen von Befehlen alle Zweige die gleiche Verarbeitungszeit aufweisen, fügt der Programmierer in die Zweige eine abgestimmte Anzahl von NOP-Anweisungen ein.

WO 2004/081971 A2 und US 2003/0115478 A1 schlagen vor, den zeitlichen Ablauf eines Programms in einem Mikroprozessor einer Chipkarte zufällig zu variieren, beispielsweise durch willkürliches Einfügen von Leer-Befehlen.

GB 2 248 125 offenbart das Auffüllen der tatsächlichen Verarbeitungszeit aller ausgeführten Prozesse jeweils auf eine Sollverarbeitungszeit.

Viele Abwehrmaßnahmen führen aber zu einem Performanceverlust und somit beispielsweise längeren Transaktionsdauern für den Benutzer. Es ist die Aufgabe der Erfindung eine verbesserte Abwehrmaßnahme bereit zu stellen, die insbesondere einen geringeren Einfluss auf die Verarbeitungszeit hat.

Diese Aufgabe wird durch den Gegenstand der unabhängigen Ansprüche gelöst. Bevorzugte Ausführungsformen der Erfindung sind Gegenstand der Unteransprüche.

Es ist ein Grundgedanke der vorliegenden Erfindung, einen Prozess zunächst auszuführen und dann, wenn es für den ausgeführten Prozess nötig ist, die tatsächliche Verarbeitungszeit des bereits ausgeführten Prozesses auf eine Sollverarbeitungszeit aufzufüllen.

Nach einem ersten Ansatz kann die Sollverarbeitungszeit kleiner gewählt werden, als eine herkömmliche Verarbeitungszeit, die einer Summe der herkömmlich jeweils maximierten Teilverarbeitungszeiten aufeinander folgender Teilabschnitte entspricht.

Nach einem zweiten Ansatz kann die gleiche Befehlsfolge wahlweise als sicherheitskritischer Prozess mit Zeitausgleich oder als unkritischer Prozess ohne Zeitausgleich ausgeführt werden. Insgesamt kann somit die Performance verbessert werden, wenn die Befehlsfolge ansonsten unnötigerweise immer mit der konstanten aber maximalen Verarbeitungszeit ausgeführt wird.

Das Prinzip, die Verarbeitungszeit durch eine zentrale Instanz wie den Scheduler auszugleichen, vereinfacht auch die Anwendungsprogrammierung. Der Programmierer muss nicht mehr die einzelnen möglichen Ausführungspfade durch sein Programm untereinander abgleichen.

Zufällige Wartezeiten oder zusätzliche, zufällig ausgewählte Abläufe können weiterhin eingefügt werden, um beispielsweise den Stromverbrauch zu verschleiern.

Das Verfahren kann weitgehend unabhängig vom verwendeten Scheduling-Prinzip eingesetzt werden.

Wird beispielsweise eine feste Verarbeitungszeit für sicherheitskritische Prozesse festgelegt und vorzugsweise zentral gespeichert, kann herkömmliches Scheduling nahezu unmodifiziert eingesetzt werden. Das Wählen einer festen Verarbeitungszeit schützt beispielsweise davor, dass bei der Entwicklung eine Abhängigkeit zwischen Verarbeitungszeit und sicherheitskritischen Daten übersehen wird.

Die Reservierung eines Prioritätswerts für eine feste Verarbeitungszeit hält den zusätzlichen Verwaltungsaufwand gering.

Im Folgenden wird eine bevorzugte Ausführungsform der Erfindung unter Bezugnahme auf die beiliegenden Zeichnungen näher erläutert. Dabei zeigen:

Fig.1 eine erfindungsgemäße, quasiparallele Abarbeitung mehrerer Threads;

Fig. 2 eine erfindungsgemäße Architektur einer Chipkarte;

Fig. 3 eine zweite Ausführungsform der Threadtyp- und Threadtabellen;

Fig. 4 eine dritte Ausführungsform der Threadtyp- und Threadtabellen; sowie

Fig. 5 eine vierte Ausführungsform der Threadtyp- und Threadtabellen.

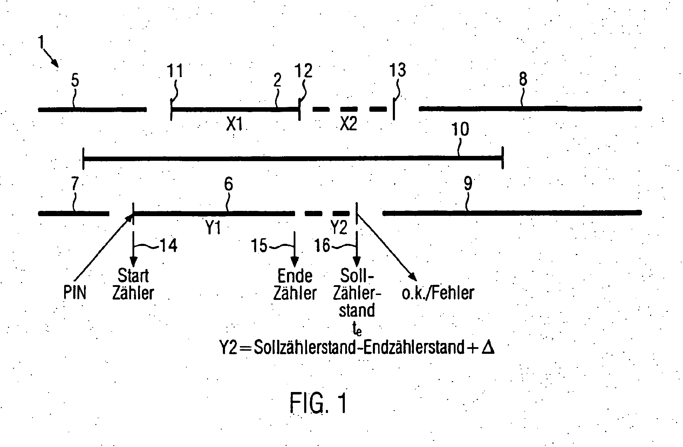

Die Figur 1 zeigt eine erfindungsgemäße, quasiparallele oder nebenläufige Abarbeitung 1 mehrerer Threads 2 bis 10. Die Grundidee der Erfindung besteht darin, für sicherheitskritische Threads eine Verarbeitungszeit vorzusehen, die vom Betriebssystem überwacht und in bestimmten Fällen aufgefüllt wird. Diese Verarbeitungszeit darf aber nicht von den sicherheitskritischen, verarbeiteten Daten des sicherheitskritischen Threads abhängen. Zu den sicherheitskritischen, verarbeiteten Daten eines Threads zur PIN-Prüfung gehört beispielsweise die eingegebene PIN und der abgespeicherte Referenzwert, sowie das Ergebnis dieser Prüfung.

Beispielhaft sind in Figur 1 übereinander drei Ausführungsstränge dargestellt, in denen die Threads 2 bis 10 quasiparallel ausgeführt werden. Insbesondere für die Threads 2 und 6 ist die gleiche, feste Verarbeitungszeit $t_e$ vorgesehen. In einer anderen Ausführungsform wird zu dieser festen Verarbeitungszeit ein Zeitunterschied $\Delta$ addiert, so dass beispielsweise die mittlere Verarbeitungszeit konstant ist. Der Zeitunterschied $\Delta$ kann positiv und negativ sein und darf nicht von den sicherheitskritischen, im Thread verarbeiteten Daten abhängen.

Die beiden Threads 2 beziehungsweise 6 beginnen zu den Zeitpunkten 11 beziehungsweise 14 und sind nach den Zeiten X1 beziehungsweise Y1 zu den Zeitpunkten 12 beziehungsweise 15 abgearbeitet. Das Betriebssystem beendet die Threads 2 beziehungsweise 6 jedoch erst zu den Zeitpunkten 13 beziehungsweise 16, so dass die Verarbeitungszeiten X1+X2 sowie Y1+Y2 konstant sind. Während der Zeiten X2 und Y2 führt das Betriebssystem oder die Virtuelle Maschine eine Auffülloperation durch und braucht keine Rechenzeit für die Threads 2 und 6 zur Verfügung zu stellen.

Zu den Zeitpunkten 11 und 14 kann je ein Interrupt programmiert werden. Die Interrupts beenden die Threads 2 bzw. 6 zu den Zeiten 13 bzw.16. Die Programmierung eines Interrupts kann beispielsweise dadurch erfolgen, dass ein Zähler mit einer Zahl vorbelegt wird und beim Umschalten des Zählers von 11..11 auf 00..00 der Interrupt ausgelöst wird. Eine solche programmierbare Interruptquelle ist in den meisten Mikroprozessoren, insbesondere Mikroprozessoren für Chipkaren vorhanden. Aus den Zählerständen zu den Zeitpunkten 12 bzw. 15 und den Sollzählerständen - meist 0 - zu den Zeitpunkten 13 bzw 16 können die Zeiten X2 bzw. Y2 berechnet werden.

In einer anderen Ausführungsform kann beim Starten der Threads 2 und 6 zu den Zeitpunkten 11 und 14 je Timer programmiert werden, die je einen Interrupt bei den Zeitpunkten 13 und 16 auslösen. Erst auf die Auslösung des entsprechenden Interrupts hin werden die Threads 2 und 6 beendet.

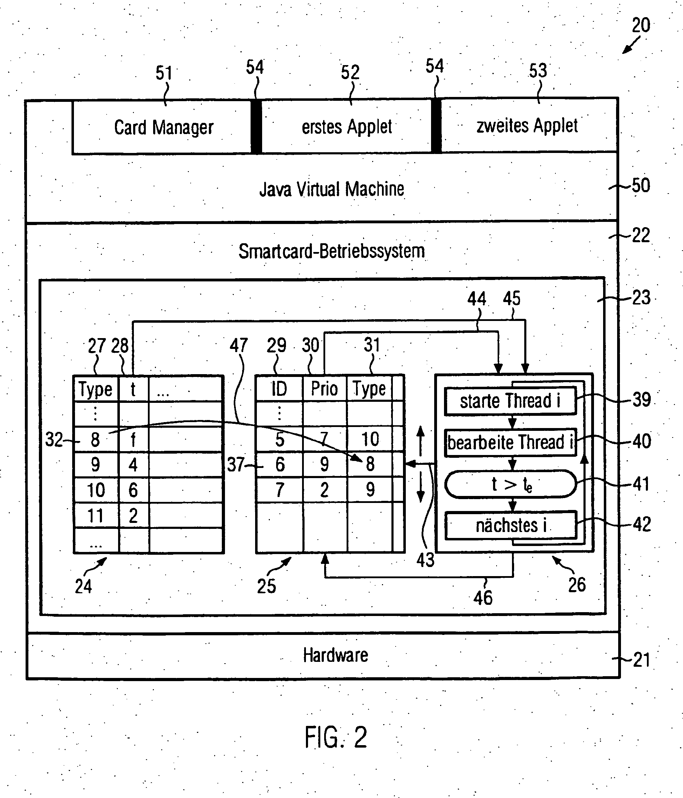

Die Figur 2 zeigt eine erfindungsgemäße Architektur einer Chipkarte 20. Die Architektur umfasst mehrere Schichten: Unten ist die Hardware 21 dargestellt, die typischerweise eine CPU mit Arbeitsspeicher RAM und einem Festwertspeicher NVM (Non Volatile Memory) sowie eine oder mehrere I/O-Schnittstelle aufweist. Darüber befindet sich das multithreadingfähige Chipkarte-Betriebssystem 22. Oben ist beispielhaft eine Java Virtual Machine (VM) 50, ein Card-Manager 51 sowie durch Firewalls 54 getrennte Applets 52 und 53 dargestellt. Anstelle der Java VM kann auch eine .Net VM eingesetzt werden.

Diese Erfindung betrifft den Scheduler 23 in einem multitasking-fähigen Chipkarte-Betriebssystem 22 oder den Scheduler 23 ein einer multithreadingfähigen Virtuellen Maschine 50. Die vorliegende Erfindung befaßt sich mit einem besonders gestalteten Scheduler, so dass andere Bestandteile des Betriebssystems oder der Virtuellen Maschine nicht betrachtet werden. In einer anderen Ausführungsform kann der erfindungsgemäße Scheduler 23 auch in der Java Virtual Machine 50 realisiert sein.

Der Scheduler 23 umfasst insbesondere eine Threadtyptabelle 24, eine Threadtabelle 25 sowie einen Scheduler 26. Der Scheduler 26 verteilt, basierend auf den in der Prioritätenspalte 30 angegebenen Prioritäten, die Rechenzeit der CPU auf die aktien Threads, die in der Threadtabelle 25 aufgeführt sind. Auf diese Weise werden die aktiven Threads quasiparallel abgearbeitet.

Das prioritätenbasierte Scheduling wird durch den Pfeil 43 dargestellt. Der Pfeil 43 zeigt auf die Zeile in der Threadtabelle, die dem Thread entspricht, der gerade von der CPU abgearbeitet wird. Um die quasiparallele Abarbeitung zu erreichen, kann der Pfeil 43 nach wenigen Milli- oder Mikrosekunden seine Position ändern, so dass ein anderer Thread weiter bearbeitet wird.

Die Figuren 2 bis 5 zeigen vier unterschiedliche Ausführungsformen der Threadtyp- und Threadtabellen. Um die Unterschiede zwischen diesen Ausführungsformen deutlich zu machen, sind in den Threadtyptabellen 24, 81 und 101 immer die gleichen Threadtypen 8 bis 11 dargestellt. Aus dem gleichen Grund sind in der Threadtabellen 25, 69, 89 und 109 die rechenwilligen Threads mit den IDs 5 bis 7 eingetragen.

In der in Figur 2 dargestellten Ausführungsform enthält die Threadtyptabelle 24 unter anderen eine Typspalte 27 und eine Zeitspalte 28. Die Einträge in der Typspalte 27 werden auch als Thread-IDs bezeichnet. Im Beispiel von Figur 2 sind die Typspalte 27 und Zeitspalte 28 vier Bit breit, so dass jeweils Werte zwischen 0 und 15, hexadezimal 0 beziehungsweise f gespeichert werden können. Die Werte in der Zeitspalte geben die maximale Zeit an, die für einen bestimmten Thread vorgesehen ist. Erfindungsgemäß sind jedoch einer oder mehrere der möglichen Werte in der Zeitspalte 28 für Threads mit einer festen Verarbeitungszeit reserviert. In der in Figur 2 dargestellten Ausführungsform sind alle ungeraden Werte in der Zeitspalte 28 für Treadtypen mit einer festen Verarbeitungszeit vorgesehen. Das am wenigsten signifikante Bit (LSB, least significant bit) gibt also an, ob es sich um einen Treadtypen mit fester Verarbeitungszeit handelt. In diesem Fall wird die in Figur 1 dargestellte Auffülloperation durchgeführt. Die maximale beziehungsweise feste Verarbeitungszeit $t_s$ in Sekunden oder Taktzyklen kann beispielsweise aus folgender Formel berechnet werden:

$$t_s=(t>>>1)*d \hspace{6cm} (1)$$

Hierbei ist t der Wert in der Zeitspalte 28, >>> der Rechtsschiebeoperator und d eine Zeitspanne in Sekunden beziehungsweise Taktzyklen. Aufgrund des Rechtsschiebeoperators hängt das Ergebnis nicht vom LSB ab. Um eine exponentielle Stufung der Verarbeitungszeiten zu erhalten, kann folgende Formel verwendet werden:

$$t_s=(1<<(t>>>1))*d \hspace{5cm} (2)$$

<< ist der Linksschiebeoperator.

In einer anderen Ausführungsform kann auch eine weitere Tabelle (Lookup-Table) verwendet werden, um Verarbeitungszeiten in Sekunden oder Taktzyklen zu bestimmen oder die Zeitspalte wird breiter, beispielsweise acht oder 16 Bit breit, gewählt.

Der einzige ungerade Wert in der Zeitspalte 28 ist 15=f, wobei f aus didaktischen Gründen so gewählt ist, dass f gleichzeitig der Anfangsbuchstaben von fest ist.

Wenn ein neuer Thread gestartet wird, wird ein Eintrag in der Threadtabelle 25 vorgenommen. Hierbei werden eine oder mehrere Zellen aus dem Eintrag in der Threadtyptabelle 24, der den Threadtyp des neu anzulegenden Threads angibt, in die Threadtabelle 25 kopiert. So wurden beispielsweise beim Anlegen der Zeile 37 der Eintrag 8 aus der Threadtypspalte 27, Zeile 32 in die entsprechende Spalte in Zeile 37 der Threadtabelle 25 kopiert, was durch Pfeil 47 veranschaulicht ist.

Da in der in Figur 2 dargestellten Ausführungsform jeder Eintrag in der Threadtabelle 25 in der Threadtypspalte 31 die Nummer des Threadtyps, also einen Verweis auf eine Zeile der Threadtyptabelle 24, enthält, ist es nicht notwendig, alle Einträge, hier insbesondere nicht den Eintrag f aus der Zeitspalte 28, aus der Threadtyptabelle 24 in die Threadtabelle 25 zu kopieren. Es werden nur solche Daten kopiert, die häufig benötigt werden. Bei selten benutzten Daten stellt die Verzögerung durch den Zugriff auf und eine eventuelle Suche in der Threadtyptabelle 24 keinen wesentlichen Nachteil dar.

Außerdem kann die Threadtyptabelle 24 eine feste Eintragslänge aufweisen und der Threadtyp die Zeilennummer angeben. Dann kann die Anfangsposition eines Zelleninhalts der Zelle X aus folgender Formel berechnet werden:

$$\text{Anfangsposition Zelle X} = \text{Anfangsposition der Threadtyptabelle} + (\text{Eintrags-}$$
$$\text{länge*Threadtyp}) + \text{Zellenoffset} \hspace{4cm} (3)$$

Hierbei gibt der Zellenoffset den Unterschied zwischen dem Anfang der linken oder ersten Zelle eines Eintrags und dem Anfang der Zelle X an. Eine Suche ist bei dieser Organisation der Threadtyptabelle 24 nicht nötig.

Der Scheduler 26 vergibt im einfachsten Fall die Rechenzeit des nächsten zur Verfügung stehenden Zeitschlitzes an den rechenwilligen Thread mit der höchsten Priorität. Das Auslesen der Prioritäten ist durch einen Pfeil 44 dargestellt. In Figur 2 wird der nächste Zeitschlitz an den Thread mit der ID 6 in Zeile 37 vergeben. Nach dem Zeitschlitz werden die Prioritäten durch den Scheduler 26 neu berechnet, was durch Pfeil 46 dargestellt ist. Bei der Neuberechnung einer Priorität kann insbesondere die in der Zeitspalte 28 angegebene maximale oder feste Verarbeitungszeit berücksichtigt werden, was durch Pfeil 45 dargestellt ist. Ferner kann die in Figur 2 nicht dargestellte, voraussichtlich erforderliche Restrechenzeit zur vollständigen Verarbeitung des entsprechenden Threads berücksichtigt werden. Das Auslesen der Prioritäten ist durch einen Pfeil 44 dargestellt. In Figur 2 wird der nächste Zeitschlitz an den Thread mit der ID 6 in Zeile 37 vergeben. Nach dem Zeitschlitz werden die Prioritäten durch den Scheduler 26 neu berechnet, was durch Pfeil 46 dargestellt ist. Bei der Neuberechnung einer Priorität kann insbesondere die in der Zeitspalte 28 angegebene maximale oder feste Verarbeitungszeit berücksichtigt werden, was durch Pfeil 45 dargestellt ist. Ferner kann die in Figur 2 nicht dargestellte, voraussichtlich erforderliche Restrechenzeit zur vollständigen Verarbeitung des entsprechenden Threads berücksichtigt werden.

In anderen Ausführungsformen können die n folgenden Zeitschlitze an die n Threads mit den höchsten Prioritäten vergeben werden, bevor die Prioritäten neu berechnet werden. n ist dabei eine kleine ganze Zahl wie beispielsweise 2, 3, 4, etc..

Im Scheduler 26 ist ein Flussdiagramm mit den Schritten 39 bis 42 dargestellt, das die Abarbeitung eines Threads i mit fester Verarbeitungszeit darstellt. In Schritt 39 wird der Thread i gestartet und in Schritt 40 abgearbeitet. In Schritt 41 wird nach der Verarbeitung des Threads i die Auffülloperation durchgeführt, wobei solange gewartet wird, bis die feste Verarbeitungszeit $t_e$ abgelaufen ist. In Schritt 42 wird i weiter geschaltet. Im Beispiel von Figur 1 wäre i zunächst =6. In Schritt 42 wäre der neue Wert für i 9.

Für die Erfindung ist es unerheblich, ob ein Thread mit fester Verarbeitungszeit tatsächlich vollständig abgearbeitet wird und anschließend gewartet wird, bis die feste Verarbeitungszeit abgelaufen ist, oder ob der Scheduler die Prioritäten so vergibt, dass die feste Verarbeitungszeit gerade erreicht wird. Es ist denkbar, die Threads mit fester Verarbeitungszeit zunächst mit hohen Prioritäten fast vollständig abzuarbeiten und die letzten Verarbeitungsschritte mit niedrigen Prioritäten so zu verzögern, dass die feste Verarbeitungszeit genau eingehalten wird.

Für die Erfindung ist es ferner nicht wichtig, dass die feste Verarbeitungszeit exakt eingehalten wird. Wichtig ist nur, dass man von der Verarbeitungszeit nicht auf die sicherheitskritischen, verarbeiteten Daten eines sicherheitskritischen Threads schließen kann. Dies ist gleichzeitig die Definition eines sicherheitskritischen Threads: Zu einem sicherheitskritischen Thread existieren sicherheitskritische Daten, auf die Angreifer nicht aus der Verarbeitungszeit schließen können sollen. Kandidaten für Threads mit fester Verarbeitungszeit sind Authentisierungen, wie beispielsweise die Prüfung einer PIN. Wichtig ist, dass die Verarbeitungszeit keine Rückschlüsse wie beispielsweise "1. Ziffer falsch", "2. Ziffer stimmt" oder "die ersten 3 Ziffern stimmen" zulässt.

Folglich kann in weiteren Ausführungsformen der Erfindung lediglich ein Mittelwert der Verarbeitungszeit oder eine minimale und eine maximale Verarbeitungszeit für sicherheitskritische Threads vorgegeben werden. Die Abweichungen vom Mittelwert können an Hand von Zufallszahlen festgelegt werden.

In weiteren Ausführungsformen der Erfindung wird die "feste" Verarbeitungszeit lediglich als grobe Richtschnur interpretiert. Vielmehr wird der Hardware- und Programmieraufwand im Scheduler dadurch gering gehalten, dass gewisse Abweichungen von der Verarbeitungszeit zugelassen werden, die beispielsweise auf die quasi-parallele Abarbeitung anderer Threads zurückzuführen sind. So hängt die Verarbeitungszeit wie eine Pseudozufallszahl in komplexer, unstetiger Weise von weiteren Parametern ab.

Es kann durchaus der Sicherheit eines Systems dienen, wenn man potentielle Angreifer auf eine falsche Fährte lockt. So ist es hilfreich, wenn ein Angreifer erkennt, dass die PIN-Prüfung in einem ersten Fall 16 ms und in einem zweiten Fall 18 ms dauert, er aber für diese letzendlich wertlose Information einen Mannmonat Arbeit investieren musste.

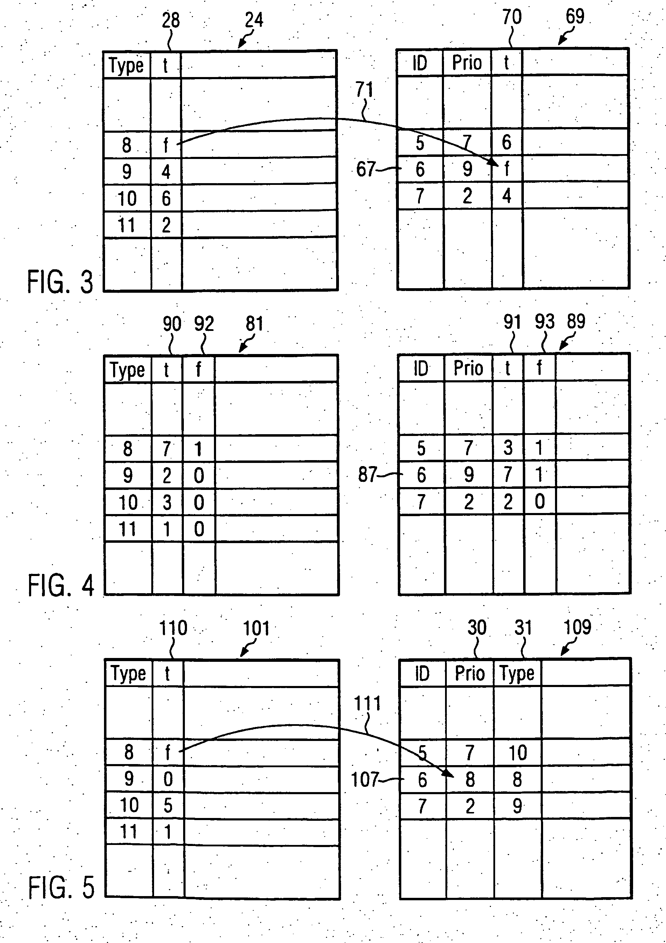

Figur 3 stellt eine weitere Ausführungsform einer Threadtabelle 69 dar. In dieser Ausführungsform weist auch die Threadtabelle 69 eine Zeitspalte 70 auf. Beim Starten eines neuen Threads kann der Wert aus der Zeitspalte 28 der Threadtyptabelle 24 in die entsprechende Zeile 67 in der Zeitspalte 70 der Threadtabelle 69 kopiert werden, was durch einen Pfeil 71 dargestellt ist. Die Bedeutung der Werte in der Zeitspalte 70 entspricht der Bedeutung der Werte in der Zeitspalte 28.

Eine Threadtyptabelle ist bei dieser Ausführungsform nicht notwendig. Vielmehr kann der Wert in der Zeitspalte 70 beispielsweise auch als Parameter an die Initialisierungsfunktion übergeben werden, die das Starten eines neuen Threads sowie das Eintragen einer neuen Zeile in der Threadtabelle 69 übernimmt:

Da sich die Zeiten jetzt in der Threadtabelle 69 befinden, benötigt die Threadtabelle 69 bei dieser Ausführungsform keine Threadtypspalte 31.

Figur 4 zeigt eine ganz ähnliche Ausführungsform. Im Unterschied zu der in Figur 3 dargestellten Ausführungsform umfasst die Threadtyptabelle 81 sowie die Threadtabelle 89 eine mit f überschriebene Festspalte 92 beziehungsweise 93. Diese Spalte ist 1 Bit breit und enthält eine 1, wenn es sich um einen sicherheitskritischen Thread handelt und 0 bei sonstigen Threads. Um die enge Verwandtschaft der in den Figuren 3 und 4 dargestellten Ausführungsformen zu unterstreichen, wurden die drei signifikantesten Bits (MSB, most significant Bits) der in Figur 3 dargestellten Zeitspalten 28 und 70 in die Zeitspalten 90 beziehungsweise 91 übernommen. Das LSB der Zeitspalten 28 und 70 findet sich in den Festspalten 92 beziehungsweise 93. In Zeile 87 befindet sich der sicherheitskritische Thread.

Figur 5 stellt eine Ausführungsform dar, bei der sich die Information, ob es sich um einen sicherheitskritischen Thread handelt, in der Prioritätenspalte 30 befindet. Bei dieser Ausführungsform gibt es zwei Gruppen von Prioritäten: kleine Prioritäten beispielsweise von 0 bis 6 und große Prioritäten beispielsweise von 9 bis 15 sind in herkömmlicher Weise für Threads mit variabler Laufzeit reserviert und werden vom Scheduler 26 auf herkömmliche

Art und Weise berechnet. Hierzu kann der Scheduler über die Typspalte 31 auf die Zeitspalte 110 in der Threadtyptabelle 101 zugreifen. Eine mittlere Priorität für sicherheitskritische Threads kann aus Informationen, die in der Threadtyptabelle enthalten sind, erzeugt werden, was durch Pfeil 111 dargestellt ist. Eine Threadtyptabelle ist jedoch für die mittleren Prioritäten nicht notwendig, wenn diese beispielsweise durch die Initialisierungsfunktion eingetragen werden. In Zeile 107 befindet sich der sicherheitskritische Thread.

Die mittleren Prioritäten, beispielsweise 7 und 8 sind für sicherheitskritische Threads mit fester Laufzeit reserviert. Diese Prioritäten werden vom Scheduler 26 nicht geändert. Jeder mittleren Priorität ist eine feste Laufzeit, ein Laufzeitbereich oder eine mittlere Laufzeit zugeordnet. Es ist wichtig, dass die für sicherheitskritische Threads reservierten Prioritäten nicht am Rand des für Prioritäten vorgesehenen Wertebereichs liegen. Andernfalls würden ausschließlich sicherheitskritische Threads Rechenzeit erhalten oder sicherheitskritische Threads keine Rechenzeit erhalten, wenn der Scheduler 26 Rechenzeit an den Thread mit der höchsten (oder niedrigsten) Priorität vergibt.

Bei objektorientierter Programmierung ist eine Vererbung von Eigenschaften oder Methoden von Elternobjekten auf Kindobjekte möglich. Hierbei wird nicht spezifiziert, wie diese Vererbung implementiert ist. Man kann die im Zusammenhang mit Figuren 2 bis 5 erläuterten Ausführungsformen als Implementierung einer Vererbung betrachten. In den in Figuren 2 und 5 dargestellten Ausführungsformen erfolgt die Vererbung über einen Verweis in der Typspalte 31 auf eine Zeile in der Threadtyptabelle 24 beziehungsweise 101. In den in Figuren 3 und 4 dargestellten Ausführungsformen erfolgt die Vererbung durch Kopieren von Zellen aus der Zeitspalte 28 in die Zeitspalte 70 beziehungsweise aus der Zeitspalte 90 und der Festspalte 92 in die Zeitspalte 91 und die Festspalte 93.

Bei den in den Figuren 2, 3 und 4 dargestellten Ausführungsformen wird die Information, ob es sich um einen sicherheitskritischen Thread oder nicht handelt, unabhängig von der Priorität gespeichert. Bei diesen Ausführungsformen können alle rechenwilligen Threads auf dem selben Prioritätslevel liegen und gleichzeitig eine Auffülloperation für jeden Thread aus der Untergruppe der rechenwilligen, sicherheitskritischen Threads durchgeführt werden. Wenn alle Threads auf demselben Prioritätslevel liegen, handelt es sich nicht mehr um prioritätsbasiertes Scheduling im engeren Sinne. Dies zeigt, dass die Erfindung auch bei nicht-prioritätsbasiertem Scheduling sinnvoll eingesetzt werden kann, um durch Auffülloperationen die Verarbeitungszeit von sicherheitskritischen Threads zu verschleiern.

Bei einem erfindungsgemäßen Scheduler können die rechenwilligen Threads anstelle in Threadtabellen 25, 69, 89 oder 109 auch in einer Warteschlange verwaltet werden. Die Warteschlange kann für jeden Prioritätslevel eine statische Datenstruktur, die als Listenkopf bezeichnet wird, sowie eine doppelt verkettete Liste, in der die rechenwilligen Threads dieses Prioritätslevels verwaltet werden, umfassen. Die doppelt verketteten Listen enthalten für jeden Thread eine Datenstruktur, die als Threadkontrollblock bezeichnet wird. Eine doppelt verkettete Liste kann auch 0 Threads umfassen. Ferner kann die Warteschlange eine statische, ganzzahlige Variable umfassen, die den höchsten Prioritätslevel angibt, in dem sich eine nicht leere, doppelt verkettete Liste befindet. Schließlich kann die Warteschlange eine statische, boolsche Variable enthalten, die angibt, ob die Prioritäten neu berechnet werden müssen. Jeder Threadkontrollblock kann die Daten einer Zeile der Threadtabellen 25, 69, 89 oder 109 enthalten.

Da multitaskingfähige Betriebssysteme sich im wesentlichen durch die Abgrenzung des Adressraums der aktiven Prozesse von Multithreading unterscheiden, kann diese Erfindung auch bei multitaskingfähigen Betriebssystemen eingesetzt werden. Ferner können bei multitaskingfähigen Betriebssystemen bestimmte Prozesse mit einer festen Zeitspanne belegt werden. Dies kann beispielsweise über Konfiguration über den Bootprozess erfolgen. Die Funktionen Sigma0() oder init() legen beim Initialisieren der Prozesshierarchie fest, dass alle von dem Elternprozess "fixtime" erzeugten Kindprozesse mit einer festen oder mit einer zumindest von sicherheitskritischen Daten unabhängigen Zeitspanne laufen. "fixtime" ist demnach ein Dämon-Prozess, der für die Überprüfung von Authentisierungsdaten erfindungsgemäß eingesetzt wird.

Obwohl die Erfindung vorstehend im Zusammenhang mit Chipkarten erläutert wurde, ist Fachleuten klar, dass die Erfindung auch bei anderen portablen Datenträgern wie beispielsweise USB-Steckern, Dongels, MMCs eingesetzt werden kann. Die Erfindung kann ferner bei fest in anderen Geräten eingebauten Sicherheitsmodulen wie beispielsweise Trusted Platform Moduls (TPM) verwendet werden. Sicherheitsmodule werden auch als Manipulationsgesicherte Einheiten bezeichnet.

Die Erfindung wurde zuvor anhand von bevorzugten Ausführungsformen näher erläutert. Für einen Fachmann ist jedoch offensichtlich, dass verschiedene Abwandlungen und Modifikationen gemacht werden können, ohne vom Geist der Erfindung abzuweichen. Deshalb wird der Schutzbereich durch die nachfolgenden Ansprüche und ihre Äquivalente festgelegt.

**Patentansprüche**

1. Verfahren in einer Einheit, die ein tragbarer Datenträger oder ein fest in ein Endgerät integriertes Sicherheitsmodul ist, mit:

   Auswählen eines ersten Prozesses (2, 6) aus mehreren nebenläufig auszuführenden Prozessen (1-10);
   Ausführen des ausgewählten ersten Prozesses (2, 6);
   **gekennzeichnet durch**
   Erkennen ob für den ersten Prozess (2,6) eine Auffülloperation (41) durchgeführt werden soll und
   Auffüllen (41) der tatsächlichen Verarbeitungszeit des ausgeführten ersten Prozesses (2, 6) auf eine Sollverarbeitungszeit,
   wobei in dem Schritt des Erkennens ein dem Prozess zugeordneter Auffüllindikator, der angibt ob eine Auffülloperation (41) durchgeführt werden soll, ausgewertet wird.

2. Verfahren gemäß Anspruch 1, **dadurch gekennzeichnet, dass** eine zentrale Instanz der Einheit die Schritte des Erkennens und des Auffüllens ausführt.

3. Verfahren gemäß Anspruch 2, **dadurch gekennzeichnet, dass** die zentrale Instanz ein Scheduler (26) ist, der auch den Schritt des Auswählens durchführt.

4. Verfahren gemäß einem der Ansprüche 1 bis 3, **dadurch gekennzeichnet, dass** zumindest eine gespeicherte Befehlsfolge wahlweise als sicherheitskritischer und somit aufzufüllender Prozess oder als unkritischer und somit nicht aufzufüllender Prozess verwendet wird.

5. Verfahren gemäß einem der Ansprüche 1 bis 4, **dadurch gekennzeichnet, dass** die Sollverarbeitungszeitungzeit durch den Wert eines Prozessparameters des ersten Prozesses (2,6) vorgegeben ist.

6. Verfahren gemäß einem der Ansprüche 1 bis 5, **dadurch gekennzeichnet, dass** für eine Vielzahl von Werten eines Prozessparameters von Prozessen jeweils eine zugeordnete Sollverarbeitungszeit vorgegeben ist.

7. Verfahren gemäß einem der Ansprüche 1 bis 6, **dadurch gekennzeichnet, dass** Prozessparameter die Sollverarbeitungszeit enthalten.

8. Verfahren gemäß einem der Ansprüche 1 bis 7, **dadurch gekennzeichnet, dass** aus Prozessparametern Sollverarbeitungszeiten bestimmbar sind.

9. Verfahren gemäß einem der Ansprüche 1 bis 8, **dadurch gekennzeichnet, dass** der Auffüllindikator ein Prozesstyp des ersten Prozesses (2,6) ist.

10. Verfahren gemäß einem der Ansprüche 1 bis 8, **dadurch gekennzeichnet, dass** der Auffüllindikator eine Prioritätsangabe des ersten Prozesses ist.

11. Verfahren gemäß einem der Ansprüche 1 bis 10, **dadurch gekennzeichnet, dass** zumindest ein vorgegebener Prioritätswert von Prozessen von einem Scheduler (26) nicht geändert wird und den Scheduler veranlasst, die Abarbeitung entsprechender Prozesse so zu steuern, dass sich die Sollverarbeitungszeit ergibt.

12. Verfahren gemäß einem der Ansprüche 1 bis 11, **dadurch gekennzeichnet, dass** der Schritt des Auffüllens (41) vor einem Ausführen eines zweiten Prozesses (8) erfolgt.

13. Verfahren gemäß Anspruch 12, **dadurch gekennzeichnet, dass** der Schritt des Auffüllens (41) vor einem Auswählen des zweiten Prozesses (8) aus den auszuführenden Prozessen (1-10) erfolgt.

14. Verfahren gemäß einem der vorhergehenden Ansprüche, **dadurch gekennzeichnet, dass** der Schritt des Auffüllens nach dem vollständigen Ausführen des ersten Prozesses (2,6) erfolgt.

15. Verfahren gemäß einem der vorhergehenden Ansprüche, **dadurch gekennzeichnet, dass** ein weiterer Prozess (1-10) erst nach dem vollständigen Ausführen des ersten Prozesses (2,6) ausgeführt wird.

**16.** Verfahren gemäß einem der vorhergehenden Ansprüche, **dadurch gekennzeichnet, dass** in dem Schritt des Auffüllens mit unterschiedlichen, im Ergebnis wirkungslosen Befehlen aufgefüllt wird.

**17.** Verfahren gemäß einem der vorhergehenden Ansprüche, **dadurch gekennzeichnet, dass** das Verfahren in einer multithreading-fähigen Virtuellen Maschine (50) realisiert ist.

**18.** Verfahren gemäß einem der vorhergehenden Ansprüche, **dadurch gekennzeichnet, dass** das Verfahren in einem Betriebssystemkern (22) realisiert ist.

**19.** Verfahren gemäß einem der vorhergehenden Ansprüche, **dadurch gekennzeichnet, dass** die Sollverarbeitungszeit durch Variation einer Basisverarbeitungszeit bestimmt wird.

**20.** Einheit, in der Form eines tragbaren Datenträgers oder eines fest in ein Endgerät eingebauten Sicherheitsmoduls, die Prozesse nebenläufig ausführen kann, mit:

Mitteln (26) zum Auswählen eines ersten Prozesses (2, 6) aus mehreren nebenläufig auszuführenden Prozessen (1-10);
Mitteln zum Ausführen des ausgewählten ersten Prozesses (2, 6);
**gekennzeichnet durch**
ein Ausgleichsmittel zum Erkennen ob für den ersten Prozess (2,6) eine Auffülloperation (41) durchgeführt werden soll, wobei ein dem Prozess zugeordneter Auffüllindikator, der angibt ob eine Auffülloperation (41) durchgeführt werden soll, ausgewertet wird, und zum Auffüllen (41) der tatsächlichen Verarbeitungszeit des ausgeführten ersten Prozesses (2, 6) auf eine Sollverarbeitungszeit.

**21.** Einheit gemäß Anspruch 20 **gekennzeichnet durch** eine Verarbeitungseinheit, einen Befehlscodespeicherbereich, in welchem der für den ersten Prozess auszuführende Befehlscode gespeichert ist und einem Systemcodespeicherbereich, in welchem der Systembefehlscode eines Schedulers gespeichert ist, wobei der Scheduler eingerichtet ist als das Mittel zum Auswählen und als das Ausgleichsmittel zu arbeiten.

**22.** Einheit gemäß Anspruch 20 oder 21 **dadurch gekennzeichnet, dass** die Einheit angepasst ist zur Ausführung eines Verfahrens gemäß einem der Ansprüche 1 bis 19.

**Claims**

**1.** A method in a unit which is a portable data carrier or a security module permanently integrated in a terminal, with:

selecting a first process (2, 6) of several processes (1-10) to be executed concurrently;
executing the selected first process (2, 6);

**characterized by**

recognizing whether for the first process (2, 6) a fill-up operation (41) is to be performed and
filling up (41) the actual processing time of the executed first process (2, 6) to a target processing time,

wherein, in the step of recognizing, a fill-up indicator allocated to the process is evaluated which specifies whether a fill-up operation (41) is to be performed.

**2.** The method according to claim 1, **characterized in that** a central entity of the unit executes the steps of recognizing and filling up.

**3.** The method according to claim 2, **characterized in that** the central entity is a scheduler (26), which also performs the step of selecting.

**4.** The method according to any of the claims 1 to 3, **characterized in that** at least one stored command sequence is utilized optionally as a security-critical process thus to be filled up or an uncritical process thus not to be tilled up.

**5.** The method according to any of the claims 1 to 4, **characterized in that** the target processing time is predetermined by the value of a process parameter of the first process (2, 6).

6. The method according to any of the claims 1 to 5, **characterized in that** for a multiplicity of values of a process parameter of processes an allocated target processing time is predetermined in each case.

7. The method according to any of the claims 1 to 6, **characterized in that** process parameters contain the target processing time.

8. The method according to any of the claims 1 to 7, **characterized in that** target processing times can be determined from process parameters.

9. The method according to any of the claims 1 to 8, **characterized in that** the fill-up indicator is a process type of the first process (2, 6).

10. The method according to any of the claims 1 to 8, **characterized in that** the fill-up indicator is a priority specification of the first process.

11. The method according to any of the claims 1 to 10, **characterized in that** at least one predetermined priority value of processes is not changed by a scheduler (26) and causes the scheduler to so control the processing of corresponding processes that the target processing time results.

12. The method according to any of the claims 1 to 11, **characterized in that** the step of filling up (41) is effected before an execution of a second process (8).

13. The method according to claim 12, **characterized in that** the step of filling up (41) is effected before a selection of the second process (8) from the processes (1-10) to be executed.

14. The method according to any of the preceding claims, **characterized in that** the step of filling up is effected after the complete execution of the first process (2, 6).

15. The method according to any of the preceding claims, **characterized in that** a further process (1-10) is executed only after the complete execution of the first process (2, 6).

16. The method according to any of the preceding claims, **characterized in that** in the step of filling up the filling up is effected with different commands which are ineffective ultimately.

17. The method according to any of the preceding claims, **characterized in that** the method is realized in a multithreading-capable virtual machine (50).

18. The method according to any of the preceding claims, **characterized in that** the method is realized in an operating-system core (22).

19. The method according to any of the preceding claims, **characterized in that** the target processing time is determined by variation of a basic processing time.

20. A unit in the form of a portable data carrier or of a security module permanently incorporated in a terminal, which can execute processes concurrently, with:

> means (26) for selecting a first process (2, 6) from several processes (1-10) to be executed concurrently;
> means for executing the selected first process (2, 6);

**characterized by**

> a compensating means for recognizing whether for the first process (2, 6) a fill-up operation (41) is to be performed, wherein a fill-up indicator allocated to the process is evaluated which specifies whether a fill-up operation (41) is to be performed, and for filling up (41) the actual processing time of the executed first process (2, 6) to a target processing time.

9

**21.** The unit according to claim 20, **characterized by** a processing unit, a command code memory area, in which the command code to be executed for the first process is stored, and a system code memory area, in which the system command code of a scheduler is stored, wherein the scheduler is configured to work as the means for selecting and as the compensating means.

**22.** The unit according to claim 20 or 21, **characterized in that** the unit is adapted for execution of a method according to any of the claims 1 to 19.

**Revendications**

**1.** Procédé dans une unité qui est un support de données portable ou un module de sécurité intégré de manière fixe dans un terminal, comprenant :

sélection d'un premier processus (2, 6) parmi plusieurs processus (1-10) à accomplir parallèlement ;
accomplissement du premier processus (2, 6) sélectionné ;

**caractérisé par**

détection indiquant si, pour le premier processus (2, 6), une opération de comblement (41) doit être exécutée et comblement (41) du temps de traitement réel du premier processus (2, 6) effectué de manière à obtenir un temps de traitement de consigne,

cependant que, à l'étape de la détection, un indicateur de comblement attribué au processus et indiquant si une opération de comblement (41) doit être exécutée est évalué.

**2.** Procédé selon la revendication 1, **caractérisé en ce qu'**une instance centrale de l'unité effectue les étapes de la détection et du comblement.

**3.** Procédé selon la revendication 2, **caractérisé en ce que** l'instance centrale est un ordonnanceur (26) qui exécute aussi l'étape de la sélection.

**4.** Procédé selon une des revendications de 1 à 3, **caractérisé en ce qu'**au moins une séquence d'instructions mémorisée est utilisée, au choix en tant que processus critique pour la sécurité et donc à combler, ou en tant que processus non critique et donc à ne pas combler.

**5.** Procédé selon une des revendications de 1 à 4, **caractérisé en ce que** le temps de traitement de consigne est prédéterminé par la valeur d'un paramètre de processus du premier processus (2, 6).

**6.** Procédé selon une des revendications de 1 à 5, **caractérisé en ce que**, pour une pluralité de valeurs d'un paramètre de processus de processus, respectivement un temps de traitement de consigne attribué est prédéterminé.

**7.** Procédé selon une des revendications de 1 à 6, **caractérisé en ce que** des paramètres de processus comportent le temps de traitement de consigne.

**8.** Procédé selon une des revendications de 1 à 7, **caractérisé en ce que**, à partir de paramètres de processus, des temps de traitement de consigne sont déterminables.

**9.** Procédé selon une des revendications de 1 à 8, **caractérisé en ce que** l'indicateur de comblement est un type de processus du premier processus (2, 6).

**10.** Procédé selon une des revendications de 1 à 8, **caractérisé en ce que** l'indicateur de comblement est une indication de priorité du premier processus.

**11.** Procédé selon une des revendications de 1 à 10, **caractérisé en ce qu'**au moins une valeur de priorité prédéterminée de processus n'est pas modifiée par un ordonnanceur (26) et amène l'ordonnanceur à commander de telle façon la réalisation de processus correspondants que le temps de traitement de consigne en découle.

**12.** Procédé selon une des revendications de 1 à 11, **caractérisé en ce que** l'étape du comblement (41) a lieu avant une réalisation d'un deuxième processus (8).

**13.** Procédé selon la revendication 12, **caractérisé en ce que** l'étape du comblement (41) a lieu avant une sélection du deuxième processus (8) parmi les processus (1-10) à effectuer.

**14.** Procédé selon une des revendications précédentes, **caractérisé en ce que** l'étape du comblement a lieu après l'accomplissement complet du premier processus (2, 6).

**15.** Procédé selon une des revendications précédentes, **caractérisé en ce qu'**un processus supplémentaire (1-10) n'est accompli qu'après l'accomplissement complet du premier processus (2, 6).

**16.** Procédé selon une des revendications précédentes, **caractérisé en ce que**, lors de l'étape du comblement, le comblement a lieu avec des instructions différentes dont aucun effet ne résulte.

**17.** Procédé selon une des revendications précédentes, **caractérisé en ce que** le procédé est réalisé dans une machine virtuelle (50) multifilières.

**18.** Procédé selon une des revendications précédentes, **caractérisé en ce que** le procédé est réalisé dans un noyau de système d'exploitation (22).

**19.** Procédé selon une des revendications précédentes, **caractérisé en ce que** le temps de traitement de consigne est déterminé par variation d'un temps de traitement de base.

**20.** Unité, sous forme d'un support de données portable ou d'un module de sécurité encastré de manière fixe dans un terminal, qui peut accomplir parallèlement des processus, dotée de:

> moyens (26) de sélection d'un premier processus (2, 6) parmi plusieurs processus (1-10) à accomplir parallèlement;
> moyens d'accomplissement du premier processus (2, 6) sélectionné

**caractérisée par**

> un moyen de compensation destiné à détecter si, pour le premier processus (2, 6), une opération de comblement (41) doit être exécutée, un indicateur de comblement attribué au processus et indiquant si une opération de comblement (41) doit être exécutée étant évalué, et destiné à combler (41) le temps de traitement réel du premier processus (2, 6) effectué, de manière à obtenir un temps de traitement de consigne.

**21.** Unité selon la revendication 20, **caractérisée par** une unité de traitement, une zone de mémorisation de code d'instruction dans laquelle est mémorisé le code d'instruction à accomplir pour le premier processus, et une zone de mémorisation de code de système dans laquelle est mémorisé le code d'instruction de système d'un ordonnanceur, l'ordonnanceur étant configuré pour travailler en tant que le moyen de sélection et en tant que le moyen de compensation.

**22.** Unité selon la revendication 20 ou 21, **caractérisée en ce que** l'unité est adaptée à l'accomplissement d'un procédé selon une des revendications de 1 à 19.

$$Y2 = Sollzählerstand - Endzählerstand + \Delta$$

FIG. 1

FIG. 2

**FIG. 3**

28  24

| Type | t | |
|------|---|---|
| | | |
| 8 | f | |
| 9 | 4 | |
| 10 | 6 | |
| 11 | 2 | |
| | | |

70  69

| ID | Prio | t | |
|----|------|---|---|
| | | | |
| 5 | 7 | 6 | |
| 6 | 9 | f | |
| 7 | 2 | 4 | |
| | | | |

71
67

**FIG. 4**

90  92  81

| Type | t | f | |
|------|---|---|---|
| | | | |
| 8 | 7 | 1 | |
| 9 | 2 | 0 | |
| 10 | 3 | 0 | |
| 11 | 1 | 0 | |
| | | | |

91  93  89

| ID | Prio | t | f | |
|----|------|---|---|---|
| | | | | |
| 5 | 7 | 3 | 1 | |
| 6 | 9 | 7 | 1 | |
| 7 | 2 | 2 | 0 | |
| | | | | |

87

**FIG. 5**

110  101

| Type | t | |
|------|---|---|
| | | |
| 8 | f | |
| 9 | 0 | |
| 10 | 5 | |
| 11 | 1 | |
| | | |

30  31  109

| ID | Prio | Type | |
|----|------|------|---|
| | | | |
| 5 | 7 | 10 | |
| 6 | 8 | 8 | |
| 7 | 2 | 9 | |
| | | | |

111
107

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004010300 A2
- WO 2004081971 A2
- US 20030115478 A1
- GB 2248125 A